# EUROPEAN PATENT APPLICATION

(11) **EP 4 333 245 A1**
(43) Date of publication of application: **06.03.2024**
(21) Application number: 22863170.1
(22) Date of filing: 18.08.2022
(51) Int. Cl.: H02J 7/00, B60L 53/00, B60L 58/27

(54) **VEHICLE, AND ENERGY CONVERSION APPARATUS AND CHARGING METHOD THEREOF**

(30) Priority: 30.08.2021 CN 202111007075
(71) Applicant: BYD Company Limited, Shenzhen, Guangdong 518118 (CN)
(72) Inventor: LI, Xiangxiang, Shenzhen, Guangdong 518118 (CN); LI, Weicheng, Shenzhen, Guangdong 518118 (CN); SHI, Lei, Shenzhen, Guangdong 518118 (CN); CHEN, Mingwen, Shenzhen, Guangdong 518118 (CN)
(74) Representative: DehnsGermany Partnerschaft von Patentanwälten
(86) International application number: PCT/CN2022/113412
(87) International publication number: WO 2023/030031

(57) **Abstract**

A vehicle has an energy conversion apparatus. The energy conversion apparatus includes a first switch module and a second switch module, and configures the second switch module between a power battery and a voltage transformation module. When the first switch module is closed, the power battery, the first switch module, an energy storage module, and an external power supply module form a first charging loop. When the second switch module is closed, the power battery, the second switch module, the voltage transformation module, the energy storage module, and the external power supply module form a second charging loop.

## Description

### CROSS-REFERENCE TO RELATED APPLICATIONS

The present disclosure claims priority to Chinese Patent Application No. 202111007075.9, entitled "VEHICLE, AND ENERGY CONVERSION APPARATUS AND CHARGING METHOD THEREOF" filed on August 30, 2021. The entire content of the above-referenced applications is incorporated herein by reference.

### FIELD

The present disclosure relates to the field of vehicle technologies, and more specifically, to a vehicle, and an energy conversion apparatus and a charging method thereof.

### BACKGROUND

Currently, an energy crisis and an environmental pollution problem are becoming increasingly serious. An electric vehicle is a novel traffic tool, and a requirement for an electric vehicle charging technology has become increasingly prominent, especially for electric vehicles that take a high-voltage route. In the related art, a battery voltage usually reaches 700 V, and an ordinary charging pile with output of 500 V obviously cannot meet the requirement for direct-current fast charging of the electric vehicle.

### SUMMARY

The present disclosure provides a vehicle, and an energy conversion apparatus and a charging method thereof, to resolve a problem in the related art that an existing charging pile cannot meet a direct-current fast charging requirement of an electric vehicle.

A first aspect of the present disclosure provides an energy conversion apparatus. The energy conversion apparatus includes an energy storage module, a voltage transformation module, a first switch module, a second switch module, and a control module, the energy storage module being connected to the voltage transformation module, the voltage transformation module being connected to a power battery and the first switch module through the second switch module, the first switch module being further connected to the energy storage module and the voltage transformation module, and the control module being respectively connected to the first switch module and the second switch module.

In an embodiment, the voltage transformation module is further connected to a motor controller, a positive electrode of the power battery is connected to a first end of the first switch module and a first end of the second switch module, a second end of the first switch module is connected to a first end of the energy storage module and a low-voltage end of the voltage transformation module, a second end of the second switch module is connected to a high-voltage end of the voltage transformation module and a first bus terminal of the motor controller, a second end of the energy storage module is connected to a negative electrode of the power battery, a common terminal of the voltage transformation module, and a second bus terminal of the motor controller, and the first end and the second end of the energy storage module are charging ports of the energy conversion apparatus.

In an embodiment, the motor controller is connected to a motor, and when the energy conversion apparatus is in a driving mode, the power battery supplies power to the motor through the first switch module, the voltage transformation module, the energy storage module, and the motor controller; and the energy storage module is connected to an external power supply module, and when the energy conversion apparatus is in a boost charging mode, the external power supply module charges the power battery through the energy storage module, the voltage transformation module, and the second switch module.

In an embodiment, the first switch module includes a switch K1, a switch K2, and a resistor R2; and a first end of the resistor R2 is connected to a first end of the switch K1 to form the first end of the first switch module, a second end of the resistor R2 is connected to a first end of the switch K2, and a second end of the switch K2 is connected to a second end of the switch K1 to form the second end of the first switch module.

In an embodiment, the voltage transformation module includes a first inductor, a second inductor, a first power switch unit, a second power switch unit, a third power switch unit, and a fourth power switch unit, a first end of the first inductor and a first end of the second inductor are jointly connected to form the low-voltage end of the voltage transformation module, a second end of the first inductor is connected to a second end of the first power switch unit and a first end of the second power switch unit, a second end of the second inductor is connected to a second end of the third power switch unit and a first end of the fourth power switch unit, a first end of the first power switch unit and a first end of the third power switch unit are jointly connected to form the high-voltage end of the voltage transformation module, and a second end of the second power switch unit and a second end of the fourth power switch unit are jointly connected to form the common terminal of the voltage transformation module.

In an embodiment, the energy conversion apparatus includes a switch K3, a switch K4, a switch K5, and a third inductor L3, a first end of the switch K3 being connected to the negative electrode of the power battery, a second end of the switch K3 being connected to the second end of the energy storage module, a first end of the switch K4 being connected to a first end of the external power supply module, a second end of the switch K4 being connected to a first end of the third inductor L3, a second end of the third inductor L3 being connected to the first end of the energy storage module, a first end of the switch K5 being connected to a second end of the external power supply module, and a second end of the switch K5 being connected to the second end of the energy storage module.

A second aspect of the present disclosure provides a charging method of an energy conversion apparatus. Based on the energy conversion apparatus described in the first aspect, the charging method includes: The energy conversion apparatus obtains a maximum output voltage of the external power supply module when being connected to an external power supply module and in a charging mode; when the maximum output voltage of the external power supply module is not greater than a preset voltage, the first switch module is controlled to be broken and the second switch module is controlled to be closed, to enable the external power supply module to perform boost charging on the power battery through the energy storage module, the voltage transformation module, and the second switch module; and when the maximum output voltage of the external power supply module is greater than the preset voltage, the first switch module is controlled to be closed and the second switch module is controlled to be broken, to enable the external power supply module to perform direct-current charging on the power battery through the energy storage module and the first switch module.

In an embodiment, before the energy conversion apparatus obtains the maximum output voltage of the external power supply module when being connected to the external power supply module and in the charging mode, the method further includes: A target required voltage value is sent to the external power supply module, and the first switch module is controlled to be closed, to enable the power battery to pre-charge the energy storage module through the first switch module, and enable a voltage value of the energy storage module to be the preset voltage, and then the voltage transformation module is controlled to enable the energy storage module to discharge through the voltage transformation module, and enable the voltage value of the energy storage module to be the target required voltage value.

In an embodiment, that the maximum output voltage of the external power supply module is obtained further includes: A target maximum output voltage of the external power supply module is obtained, a constant-current boost charging command is continuously sent to the external power supply module, and when it is detected that a current outputted by the external power supply module is not a constant current or an actual maximum output voltage is less than the target maximum output voltage, it is determined that the target maximum output voltage is a false value, and the actual maximum output voltage is set to the maximum output voltage.

In an embodiment, that the constant-current boost charging command is continuously sent to the external power supply module further includes: The external power supply module obtains an actual voltage value of the energy storage module, and outputs a current to the energy conversion apparatus when it is determined that the target required voltage value and the actual voltage value of the energy storage module meet a preset standard.

In an embodiment, that the external power supply module is enabled to perform boost charging on the power battery through the voltage transformation module includes: An actual current value outputted by the voltage transformation module and a target current value are obtained, the actual current value is compared with the target current value, and a PWM control signal is outputted to the voltage transformation module to enable the voltage transformation module to output the target current value to the power battery to charge the power battery.

In an embodiment, the charging method further includes: When the energy conversion apparatus is in a driving mode, the first switch module is controlled to be closed, and the voltage transformation module is controlled to enable the power battery to boost and supply power to the motor controller through the first switch module, the voltage transformation module, and the energy storage module.

A third aspect of the present disclosure provides a vehicle. The vehicle further includes the energy conversion apparatus described in the first aspect.

According to the vehicle, and the energy conversion apparatus and the charging method thereof provided in the present disclosure, the first switch module and the second switch module are configured, and the second switch module is configured between the power battery and the voltage transformation module. When the first switch module is closed, the power battery, the first switch module, the energy storage module, and the external power supply module form a first charging loop. When the second switch module is closed, the power battery, the second switch module, the voltage transformation module, the energy storage module, and the external power supply module form a second charging loop. When the maximum output voltage of the external power supply module is not greater than the preset voltage, the second charging loop is controlled to start working, to enable the external power supply module to perform boost charging on the power battery through the voltage transformation module. When the maximum output voltage of the external power supply module is greater than the preset voltage, the first charging loop is controlled to start working, to enable the external power supply module to perform direct-current charging on the power battery through the first switch module. According to the technical solutions in the present disclosure, the high-voltage power battery may supply power to a vehicle, which can reduce a requirement on a current carrying capacity of a cable connector, and further reduce a volume and a weight of the cable connector. When a high-voltage power supply platform direct-current charging pile is connected, direct-current charging may be performed through the first charging loop, which accelerates a charging speed of the power battery. When a low-voltage power supply platform direct-current charging pile is connected, boost charging may be performed through the second charging loop, which resolves a problem in the related art that the low-voltage power supply platform direct-current charging pile cannot fully charge or cannot charge the power battery.

Additional aspects and advantages of the present disclosure may be provided in the following description, some of which may become apparent from the following description or may be learned from practices of the present disclosure.

### BRIEF DESCRIPTION OF THE DRAWINGS

The accompanying drawings that are incorporated into this specification and constitute a part of the specification illustrate embodiments of the present disclosure, and are used for describing a principle of the embodiments of the present disclosure together with the specification.
FIG. 1 is a schematic structural diagram of an energy conversion apparatus according to a first embodiment of the present disclosure;
FIG. 2 is a schematic structural diagram of a specific energy conversion apparatus according to a first embodiment of the present disclosure;
FIG. 3 is a circuit diagram of an energy conversion apparatus according to a first embodiment of the present disclosure;
FIG. 4 is a flowchart of a charging method of an energy conversion apparatus according to a second embodiment of the present disclosure;
FIG. 5 is a diagram of a current flow of an energy conversion apparatus for pre-charging according to a second embodiment of the present disclosure;
FIG. 6 is a diagram of a first current flow of an energy conversion apparatus according to a second embodiment of the present disclosure;
FIG. 7 is a diagram of a second current flow of an energy conversion apparatus according to a second embodiment of the present disclosure;
FIG. 8 is a diagram of a third current flow of an energy conversion apparatus according to a second embodiment of the present disclosure;
FIG. 9 is a diagram of a fourth current flow of an energy conversion apparatus according to a second embodiment of the present disclosure; and
FIG. 10 is a schematic structural diagram of a vehicle according to a third embodiment of the present disclosure.

### DETAILED DESCRIPTION

The embodiments of the present disclosure are described below in detail. Examples of the embodiments are shown in the accompanying drawings, and same or similar reference signs in all the accompanying drawings indicate same or similar components or components having same or similar functions. The embodiments described below with reference to the accompanying drawings are exemplary, and are intended to explain the present disclosure and cannot be construed as a limitation to the present disclosure.

A vehicle, and an energy conversion apparatus and a charging method thereof that are provided in the embodiments of the present disclosure are described below with reference to the accompanying drawings.

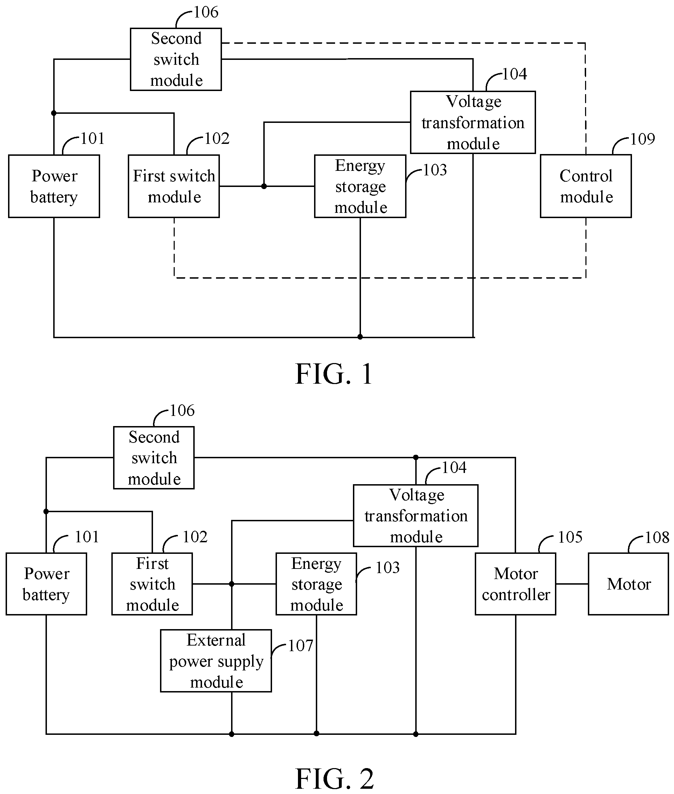

An embodiment of the present disclosure provides an energy conversion apparatus. As shown in FIG. 1, the energy conversion apparatus includes an energy storage module 103, a voltage transformation module 104, a first switch module 102, a second switch module 106, and a control module 109. The energy storage module 103 is connected to the voltage transformation module 104, the voltage transformation module 104 is connected to a power battery 101 and the first switch module 102 through the second switch module 106, the first switch module 102 is further connected to the energy storage module 103 and the voltage transformation module 104, and the control module 109 is respectively connected to the first switch module 102 and the second switch module 106.

The energy storage module 103 is configured to store electric energy outputted by the power battery 101, and two ends of the energy storage module 103 may be connected to an external power supply module 107, as shown in FIG. 2. When the power battery 101 completes charging on the energy storage module 103, a voltage of the energy storage module 103 is the same as or close to a voltage of the external power supply module 107, to enable the external power supply module 107 to normally output a voltage. Optionally, the energy storage module 103 may include an energy storage device such as a capacitor.

The voltage transformation module 104 may include an energy storage unit and a power switch unit. The power switch unit of the voltage transformation module 104 is closed or broken according to a signal outputted by the control module 109, to enable the energy storage unit to be connected to different loops for charging or discharging, thereby achieving boosting or bucking. The voltage transformation module 104 includes a low-voltage end, a high-voltage end, and a common terminal. The low-voltage end and the high-voltage end of the voltage transformation module 104 are defined according to values of an input voltage and an output voltage. After receiving the input voltage, the low-voltage end and the common terminal of the voltage transformation module 104 boost the input voltage, and then output the input voltage from the high-voltage end and the common terminal of the voltage transformation module 104. After receiving the input voltage, the high-voltage end and the common terminal of the voltage transformation module 104 buck the input voltage and then output the input voltage from the low-voltage end and the common terminal of the voltage transformation module 104.

The first switch module 102 is configured to enable the power battery 101 to connect the energy storage module 103 and the external power supply module 107. When the first switch module 102 is closed, the power battery 101, the first switch module 102, the energy storage module 103, and the external power supply module 107 form a first charging loop. The external power supply module 107 may charge the power battery 101 by using the charging loop.

The second switch module 106 is configured to enable the power battery 101 to connect the voltage transformation module 104, the energy storage module 103, and the external power supply module. When the second switch module 106 is closed, the power battery 101, the second switch module 106, the voltage transformation module 104, the energy storage module 103, and the external power supply module 107 form a second charging loop. The external power supply module 107 performs boost charging on the power battery 101 by using the charging loop. The external power supply module 107 may be an off-board charger, for example, a charging pile, or the like.

Referring to FIG. 2, the control module 109 may collect a voltage, a current, a temperature of the power battery 101 and a phase current of a motor 108. The motor 108 is a three-phase alternating current motor. The control module 109 may include a vehicle controller, a control circuit of the motor controller 105, and a BMS battery manager circuit that are connected through a CAN line. Different modules in the control module 109 control on or off of the first switch module 102 and the second switch module 106 according to obtained information, which achieves conduction of different charging loops, and may also control on and off the power switch in the voltage transformation module 104 to achieve conduction of different current loops, thereby boosting or bucking the input voltage.

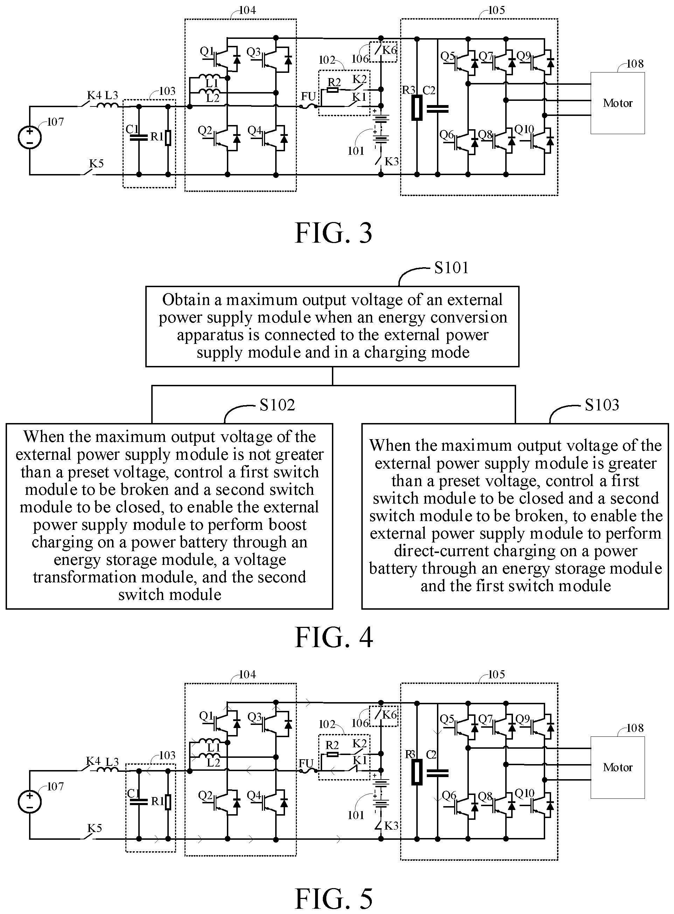

In an implementation, as shown in FIG. 3, the voltage transformation module 104 is further connected to a motor controller 105, a positive electrode of the power battery 101 is connected to a first end of the first switch module 102 and a first end of the second switch module 106, a second end of the first switch module 102 is connected to a first end of the energy storage module 103 and a low-voltage end of the voltage transformation module 104, a second end of the second switch module 106 is connected to a high-voltage end of the voltage transformation module 104 and a first bus terminal of the motor controller 105, a second end of the energy storage module 103 is connected to a negative electrode of the power battery 101, a common terminal of the voltage transformation module 104, and a second bus terminal of the motor controller 105, and the first end and the second end of the energy storage module 103 are charging ports of the energy conversion apparatus.

When a maximum output voltage of the external power supply module 107 is not greater than a preset voltage, the preset voltage being a current voltage of the power battery 101, the external power supply module 107 cannot directly supply power to the power battery 101. In this case, the first switch module 102 is controlled to be broken and the second switch module 106 is controlled to be closed, and the second charging loop starts working, to enable the external power supply module 107 to perform boost charging on the power battery 101 through the voltage transformation module 104. When the maximum output voltage of the external power supply module 107 is greater than the preset voltage, the external power supply module 107 may directly supply power to the power battery 101. The first switch module 102 is controlled to be closed and the second switch module 106 is controlled to be broken, and the first charging loop starts working, to enable the external power supply module 107 to perform direct-current charging on the power battery 101 through the first switch module 102.

It is to be noted that, as shown in FIG. 2, the high-voltage end and the common terminal of the voltage transformation module 104 are further connected to the motor controller 105, the motor controller 105 is connected to the motor 108, and when the energy conversion apparatus is in a driving mode, the power battery 101 supplies power to the motor 108 through the first switch module 102, the voltage transformation module 104, the energy storage module 103, and the motor controller 105; and the energy storage module 103 is connected to the external power supply module 107, and when the energy conversion apparatus is in a boost charging mode, the external power supply module 107 charges the power battery 101 through the energy storage module 103, the voltage transformation module 104, and the second switch module 106. As can be seen, in the driving mode and the boost charging mode, both the energy storage module 103 and the voltage transformation module 104 are used, that is, different functions are achieved by reusing the energy storage module 103 and the voltage transformation module 104 in different circuits, thereby improving utilization of modules in the circuit. The external power supply module 107 may boost and supply power to the motor controller 105 and the motor 108 through the voltage transformation module 104, and the power battery 101 may also boost and supply power to the motor controller 105 and the motor 108 through the voltage transformation module 104. When a vehicle is driving, the voltage transformation module 104 may boost a voltage of a battery pack with a wide voltage range or a low-voltage platform battery pack to a voltage required in a high-efficiency area of the motor controller 105, to ensure a vehicle power requirement. When power is fed to the low-voltage platform battery pack, the motor controller 105 and the motor 108 may also buck and supply power to the low-voltage platform battery pack through the voltage transformation module 104.

According to the energy conversion apparatus provided in the present disclosure, the first switch module 102 and the second switch module 106 are configured, and the second switch module 106 is configured between the power battery 101 and the voltage transformation module 104. When the first switch module 102 is closed, the power battery 101, the first switch module 102, the energy storage module 103, and the external power supply module 107 form a first charging loop. When the second switch module 106 is closed, the power battery 101, the second switch module 106, the voltage transformation module 104, the energy storage module 103, and the external power supply module 107 form a second charging loop. When the maximum output voltage of the external power supply module 107 is not greater than the preset voltage, the second charging loop is controlled to start working, to enable the external power supply module 107 to perform boost charging on the power battery 101 through the voltage transformation module 104. When the maximum output voltage of the external power supply module 107 is greater than the preset voltage, the first charging loop is controlled to start working, to enable the external power supply module 107 to perform direct-current charging on the power battery 101 through the first switch module 102. According to the technical solutions in the present disclosure, the high-voltage power battery 101 may supply power to a vehicle, which can reduce a requirement on a current carrying capacity of a cable connector, and further reduce a volume and a weight of the cable connector. When a high-voltage power supply platform direct-current charging pile is connected, direct-current charging may be performed through the first charging loop, which accelerates a charging speed of the power battery 101. When a low-voltage power supply platform direct-current charging pile is connected, boost charging may be performed through the second charging loop, which resolves a problem in the related art that the low-voltage power supply platform direct-current charging pile cannot fully charge or cannot charge the power battery 101.

In an implementation, as shown in FIG. 3, the energy storage module 103 includes a capacitor C1 and a resistor R1. A first end of the capacitor C1 is connected to a first end of the resistor R1 to form the first end of the energy storage module 103, and a second end of the capacitor C1 is connected to a second end of the resistor R1 to form the second end of the energy storage module 103. The first switch module 102 includes a switch K1, a switch K2, and a resistor R2; and a first end of the resistor R2 is connected to a first end of the switch K1 to form the first end of the first switch module 102, a second end of the resistor R2 is connected to a first end of the switch K2, and a second end of the switch K2 is connected to a second end of the switch K1 to form the second end of the first switch module 102.

In this implementation, the resistor R2 is connected in series with the switch K2 and then connected to the capacitor C1. When the power battery 101 charges the capacitor C1, the switch K2 is first closed for pre-charging, to enable the power battery 101 to slowly charge the capacitor C1 to the preset voltage through the resistor R2, for example, 80% of the preset voltage, to prevent damage to the capacitor C 1 caused by charging the capacitor C1 too quickly.

In an implementation, the voltage transformation module 104 includes a first inductor L1, a second inductor L2, a first power switch unit Q 1, a second power switch unit Q2, a third power switch unit Q3, and a fourth power switch unit Q4. A first end of the first inductor L1 and a first end of the second inductor L2 are jointly connected to form the low-voltage end of the voltage transformation module 104, a second end of the first inductor L1 is connected to a second end of the first power switch unit Q1 and a first end of the second power switch unit Q2, a second end of the second inductor L2 is connected to a second end of the third power switch unit Q3 and a first end of the fourth power switch unit Q4, a first end of the first power switch unit Q1 and a first end of the third power switch unit Q3 are jointly connected to form the high-voltage end of the voltage transformation module 104, and a second end of the second power switch unit Q2 and a second end of the fourth power switch unit Q4 are jointly connected to form the common terminal of the voltage transformation module 104. Specifically, the voltage transformation module 104 includes the first inductor L1, the second inductor L2, an IGBT Q1, an IGBT Q2, an IGBT Q3, and an IGBT Q4. The first end of the first inductor L1 and the first end of the second inductor L2 are jointly connected to form the low-voltage end of the voltage transformation module 104, the second end of the first inductor L1 is connected to an emitter of the IGBT Q1 and a collector of the IGBT Q2, the second end of the second inductor L2 is connected to an emitter of the IGBT Q3 and a collector of the IGBT Q4, a collector of the IGBT Q1 and the collector of the IGBT Q2 are jointly connected to form the high-voltage end of the voltage transformation module 104, and an emitter of the IGBT Q2 and an emitter of the IGBT Q4 are jointly connected to form the common terminal of the voltage transformation module 104.

In this embodiment, a controllable switch and an inductor are configured in the voltage transformation module 104. When a voltage is inputted from the low-voltage end and the common terminal of the voltage transformation module 104, the IGBT Q2 and the IGBT Q4 are controlled to be closed, and the IGBT Q1 and the IGBT Q3 are controlled to be broken, to enable the external power supply module 107 to charge the inductor; and the IGBT Q2 and the IGBT Q4 are controlled to be broken, and the IGBT Q1 and the IGBT Q3 are controlled to be closed, to enable the external power supply module 107 and the inductor to discharge to the power battery 101 through a diode. Because there is a current outputted in the inductor, the external power supply module 107 achieves boost charging on the power battery 101.

In an implementation, the energy conversion apparatus further includes a switch K3, a switch K4, a switch K5, and a third inductor L3. A first end of the switch K3 is connected to the negative electrode of the power battery 101, a second end of the switch K3 is connected to the second end of the energy storage module 103, a first end of the switch K4 is connected to a first end of the external power supply module 107, a second end of the switch K4 is connected to a first end of the third inductor L3, a second end of the third inductor L3 is connected to the first end of the energy storage module 103, a first end of the switch K5 is connected to a second end of the external power supply module 107, and a second end of the switch K5 is connected to the second end of the energy storage module 103.

In this implementation, the switch K3 is configured, to control the power battery 101 to output a current or stop outputting a current. For example, when a fault occurs in the power battery 101 during current outputting, the switch K3 is controlled to the broken, to disconnect the power battery 101 and the circuit, thereby protecting circuit safety. The third inductor L3 is configured, which is designed according to a working frequency (for example, 20 KHz) of the voltage transformation module 104, so that a current ripple may be controlled within ±1%. The switch K4 and the switch K5 are configured, so that connection and disconnection with the external power supply module 107 may be implemented.

For the motor controller 105, the motor controller 105 includes a resistor R3, a capacitor C2, a fifth power switch unit Q5, a sixth power switch unit Q6, a seventh power switch unit Q7, an eighth power switch unit Q8, a ninth power switch Q9, and a tenth power switch Q10. A control end of each power switch unit is connected to the control module 109. A first end of the fifth power switch unit Q5, a first end of the seventh power switch unit Q7, a first end of the ninth power switch unit Q9, and a first end of the resistor R3, and a first end of the capacitor C2 are jointly connected to form a first end of the motor controller 105, and a second end of the sixth power switch unit Q6, a second end of the eighth power switch unit Q8, a second end of the tenth power switch unit Q10, a second end of the resistor R3, and a second end of the capacitor C2 are jointly connected to form a second end of the motor controller 105. A first phase coil of the three-phase alternating current motor is connected to a second end of the fifth power switch unit Q5 and a first end of the sixth power switch unit Q6, a second phase coil of the three-phase alternating current motor is connected to a second end of the seventh power switch unit Q7 and a first end of the eighth power switch unit Q8, and a third phase coil of the three-phase alternating current motor is connected to a second end of the ninth power switch unit Q9 and a first end of the tenth power switch unit Q10.

For a specific control method of the control module 109, refer to the following embodiments.

A second embodiment of the present disclosure provides a charging method of an energy conversion apparatus based on a first embodiment. The charging method provided in the second embodiment is used for enabling the external power supply module to charge the power battery. As shown in FIG. 4, the charging method includes:
Step S101: When being connected to an external power supply module and in a charging mode, the energy conversion apparatus obtains a maximum output voltage of the external power supply module.

In step S101, that the maximum output voltage of the external power supply module is obtained includes:
A constant-current boost charging command is sent to the external power supply module until a voltage outputted by the external power supply module is the maximum output voltage.

After the external power supply module (a direct-current charging pile) is connected to the energy conversion apparatus, a command is sent to the direct-current charging pile to enable the direct-current charging pile to start small-current boosting charging at a constant current. During small-current charging at the constant current, an actual voltage of the direct-current charging pile is recognized, that is, an output voltage of the direct-current charging pile is received in real time. When the voltage cannot be increased as required, it is determined that the output voltage of the direct-current charging pile is less than a preset voltage value. For example, if it is determined that the charging pile is a pile whose voltage is not greater than 550 V, step S 102 is performed, and a charging current of the direct-current charging pile is switched to a maximum target charging current required by the control module to start charging; and if the output voltage of the direct-current charging pile may be increased to the preset voltage value according to a required voltage, for example, greater than 550 V and increasing as a voltage of the power battery, step S103 is performed.

Step S102: When the maximum output voltage of the external power supply module is not greater than a preset voltage, the first switch module is controlled to be broken and the second switch module is controlled to be closed, to enable the external power supply module to perform boost charging on the power battery through the energy storage module, the voltage transformation module, and the second switch module.

In step S 102, that the external power supply module is enabled to perform boost charging on the power battery through the voltage transformation module includes:
An actual current value outputted by the voltage transformation module is obtained, the actual current value is compared with a target current value, and a PWM control signal is outputted to the voltage transformation module to enable the voltage transformation module to output the target current value to the power battery to charge the power battery.

The control module exchanges information with the external power supply module, obtains a target current value according to a current charging capacity of the power battery, for example, a charging power, the target current value meeting a specified standard for a power supply device to output a current, and sends the target current value to the external power supply module, to enable the external power supply module to output according to the target current value. When the external power supply module outputs a current, if the control module controls a power switch tube in the voltage transformation module to be closed, an inductor energy storage current increases; and if the power switch tube is controlled to be broken, an inductor freewheeling current decreases. A PWM wave is applied to the power switch tube, repeated on and off may form a direct current in the inductor. A magnitude of the direct current is jointly determined based on a voltage of the external power supply module, a voltage of the power battery, and a duty cycle of the PWM wave. The external power supply module works in a constant voltage mode, the output voltage is controllable within a range, an output voltage of the off-board charger may be set to a maximum value of output, and finally a charging current is controlled by adjusting the duty cycle of the PWM wave, to meet a requirement of the control module for the charging current of the power battery.

Step S103: When the maximum output voltage of the external power supply module is greater than the preset voltage, the first switch module is controlled to be closed and the second switch module is controlled to be broken, to enable the external power supply module to perform direct-current charging on the power battery through the first switch module.

In this step, when the maximum output voltage of the external power supply module is greater than the preset voltage, the power battery is directly charged through the external power supply module, which accelerates the charging speed of the power battery.

According to the charging method of an energy conversion apparatus provided in the second embodiment of the present disclosure, when the maximum output voltage of the external power supply module is not greater than the preset voltage, the external power supply module is enabled to perform boost charging on the power battery through the voltage transformation module; and when the maximum output voltage of the external power supply module is greater than the preset voltage, the external power supply module is enabled to perform direct-current charging on the power battery through the first switch module. According to the technical solutions in the present disclosure, the high-voltage power battery may supply power to a vehicle, which can reduce a requirement on a current carrying capacity of a cable connector, and further reduce a volume and a weight of the cable connector. When a high-voltage power supply platform direct-current charging pile is connected, direct-current charging may be performed, which accelerates a charging speed of the power battery. When a low-voltage power supply platform direct-current charging pile is connected, boost charging may be performed, which resolves a problem in the related art that the low-voltage power supply platform direct-current charging pile cannot fully charge or cannot charge the power battery.

In some embodiments, before step S101, the method further includes:

A target required voltage value is sent to the external power supply module, and the first switch module is controlled to be closed, to enable the power battery to pre-charge the energy storage module through the first switch module, and enable a voltage value of the energy storage module to be the preset voltage, and then the voltage transformation module is controlled to enable the energy storage module to discharge through the voltage transformation module, and enable the voltage value of the energy storage module to be the target required voltage value.

The control module sends a target required voltage to the direct-current charging pile and controls the first switch module to be closed, the power battery, the first switch module, and the energy storage module form a loop, to enable the power battery to pre-charge the energy storage module through the first switch module, and enable a voltage value of the energy storage module (a low-voltage side capacitor of the voltage transformation module) to be the preset voltage. In this case, the voltage transformation module is also controlled to be closed, to enable the power battery, the voltage transformation module, and a capacitor in the motor controller (a high-voltage side capacitor of the voltage transformation module) form a loop, and enable a voltage value of the high-voltage side capacitor of the voltage transformation module to be the preset voltage. In this case, a voltage of the low-voltage side capacitor of the voltage transformation module is the same as a voltage of the high-voltage side capacitor of the voltage transformation module. When the external power supply module charges the energy conversion apparatus, an output voltage of the external power supply module needs to be the same as the voltage of the low-voltage side capacitor of the voltage transformation module, and in this case, the voltage of the low-voltage side capacitor of the voltage transformation module increases and needs to be bucked and discharged, the voltage transformation module is controlled to enable the energy storage module to discharge through the voltage transformation module, and enable the voltage value of the energy storage module to be target required voltage value.

In this implementation, when the energy conversion apparatus is connected to the external power supply module to charge the power battery, the power battery first charges the low-voltage side capacitor of the voltage transformation module and the high-voltage side capacitor of the voltage transformation module, to enable the voltage of the high-voltage side capacitor of the voltage transformation module to be the preset voltage, to avoid an impact of the external power supply module on a post-stage circuit of the voltage transformation module when charging the power battery, thereby achieving charging safety. In addition, the voltage transformation module is configured, to enable the low-voltage side capacitor of the voltage transformation module to be bucked through the voltage transformation module, so that the low-voltage side capacitor of the voltage transformation module is the same as the output voltage of the external power supply module, thereby meeting a condition for the external power supply module to output a current.

In some embodiments, the step in which the maximum output voltage of the external power supply module is obtained further includes:
A target maximum output voltage of the external power supply module is obtained, a constant-current boost charging command is continuously sent to the external power supply module, and when it is detected that a current outputted by the external power supply module is not a constant current or an actual maximum output voltage is less than the target maximum output voltage, it is determined that the target maximum output voltage is a false value, and the actual maximum output voltage is set to the maximum output voltage.

For external power supply modules (direct-current charging piles) on an actual market, in order to meet charging requirements of electric vehicles as much as possible, many direct-current charging piles mounted early use low-voltage platform power modules (with a maximum voltage of 500 V). Operators change a control board program of the direct-current charging pile, and when the direct-current charging piles interacts with control module information, the direct-current charging pile sends a false maximum voltage to the control module as a high-voltage platform (with a voltage up to 750 v to 1000 V). In order to be compatible with this situation, the pile may also be charged, logic that the vehicle recognizes a pile voltage platform during charging is optimized, and the control module sends a command to the direct-current charging pile to start small-current boosting charging at a constant current, performs real voltage identification on the direct-current charging pile during small-current boosting charging at the constant current, that is, the output voltage of the direct-current charging pile is received in real time. When the voltage cannot be increased as required, it is determined that the target maximum output voltage is a false value, and the actual maximum output voltage is set to the maximum output voltage. In this case, the energy conversion apparatus is controlled to boost the output voltage of the direct-current charging pile, which resolves a problem that the power battery is not fully charged because the direct-current charging pile sends a false voltage.

In some embodiments, the step in which the constant-current boost charging command is continuously sent to the external power supply module further includes:
The external power supply module obtains an actual voltage value of the energy storage module, and a current is outputted to the energy conversion apparatus when it is determining that the target required voltage value and the actual voltage value of the energy storage module meet a preset standard.

When an error between the actual voltage value of the sampled energy storage module and the target required voltage value is detected to be within a range of -5% to 5%, it is determined that a preset standard is met.

According to the national standard, the external power supply module detects that an error between a vehicle-side battery voltage and a communication packet battery voltage is in a range of ≤ ±5%, and the external power supply module may output a current when the standard is met.

In this implementation, according to the target required voltage value sent by the control module and the actual voltage of the energy storage module, the external power supply module determines whether a charging condition in the preset standard is met, and outputs a current to the voltage transformation module when the preset standard is met, to make control of charging the power battery easier, and ensure safety of charging the vehicle.

In some embodiments, the charging method further includes:
When the energy conversion apparatus is in a driving mode, the first switch module is controlled to be closed, and the voltage transformation module is controlled to enable the power battery to boost and supply power to the motor controller through the first switch module, the voltage transformation module, and the energy storage module.

When the vehicle is driving, the voltage of the power battery may be relatively low. In this case, the first switch module is controlled to be closed, and the power battery, the first switch module, the voltage transformation module, the energy storage module, and the motor controller form a boost circuit, so that an output voltage of the power battery is boosted, and normal driving of the vehicle is ensured.

Using the circuit diagram shown in FIG. 3 as an example, the charging method of an energy conversion apparatus provided in the second embodiment is described in detail below. When direct-current charging is performed on the vehicle, the direct-current charging pile reports a real internal power module voltage output range to the vehicle, and in a stage of matching parameters between the direct-current charging pile and the electric vehicle, the vehicle may receive a maximum voltage output range sent by the direct-current charging pile.

If the maximum output voltage range of the direct-current charging pile received by the vehicle is not greater than 550 V, the voltage transformation module is started for direct-current charging. If the vehicle is in an OFF gear when a gun is inserted, pre-charging is first performed, the switch K3 is broken, and then the switch K2 is broken. When the control module determines that a pre-charging voltage meets a pre-charging completion condition, a switch K6 is broken, and the switch K2 is broken. The control module sends the target required voltage to the direct-current charging pile, and controls the voltage transformation module to enable the power battery to perform buck charging on the energy storage module to the preset voltage. The control module detects that the direct-current charging pile reaches a packet required voltage and then breaks the switch K4 and the switch K5. In addition, a charging permission is sent to the direct-current charging pile and the voltage transformation module, and charging is performed in a constant current charging manner. When the direct-current charging pile meets a charging requirement according to an own status, the direct-current charging pile closes an own charging contactor and starts charging. When the vehicle into which the gun is inserted is in an OK gear, when direct-current charging is started, a main switch K1 of the entire vehicle needs to be first disconnected, and a charging process of the vehicle in the OFF gear is performed again.

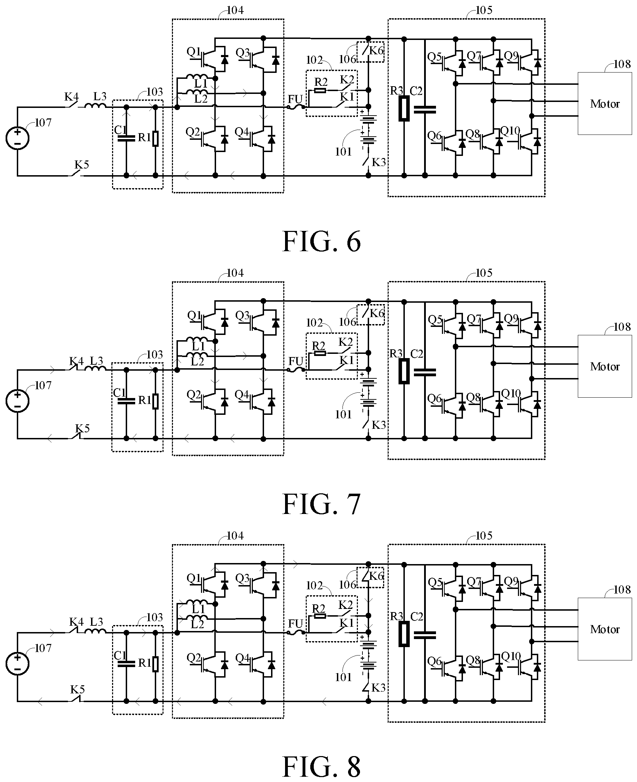

Specifically, when a maximum voltage of the direct-current charging pile is not greater than a maximum voltage limit of a vehicle battery pack, the voltage transformation module is started to work. A working status of the voltage transformation module includes a boost mode and a buck mode. For a specific work control energy flow of the voltage transformation module, refer to FIG. 5 to FIG. 8. As shown in FIG. 5, the power battery 101 pre-charges the capacitor C1 and the capacitor C2. The power battery 101, the switch K1, and the capacitor C1 form a first discharge circuit, and the power battery 101, the inductor L1, the inductor L2, the IGBT Q1, the IGBT Q3, and capacitor C2 form a second discharge circuit, to make voltages on the capacitor C1 and the capacitor C2 are the same. Then, as shown in FIG. 6, the IGBT Q2 and the IGBT Q4 are controlled to be closed, to enable the capacitor C1 to discharge the inductor L1 and the inductor L2 to the preset voltage and enable a voltage on the capacitor C1 to be the same as the output voltage of the external power supply module 107, to further enable the external power supply module 107 to output a current. As shown in FIG. 7, the voltage transformation module 104 works in the boost mode: The external power supply module 107, the switch K4, the inductor L3, the inductor L1, the inductor L2, the IGBT Q2, and the IGBT Q4 form a first charging loop. As shown in FIG. 8, the external power supply module 107, the switch K4, the inductor L3, the inductor L1, the inductor L2, the IGBT Q1, the IGBT Q2, the switch K6, the power battery 101, and the switch K3 form a second charging loop. The first charging loop and the second charging loop are controlled to work alternately to achieve boost charging on the power battery 101.

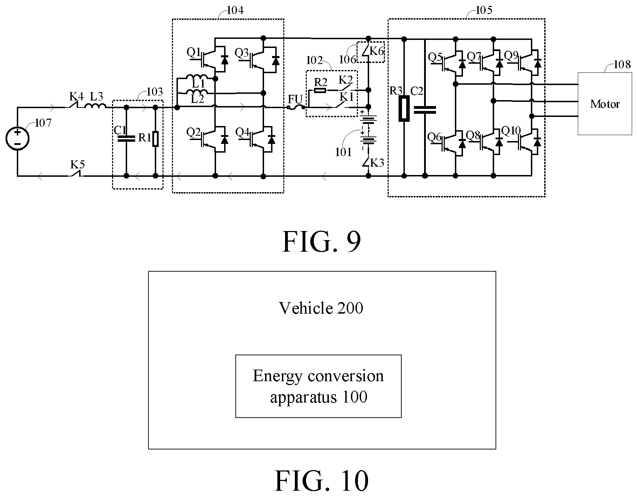

If the maximum output voltage range of the direct-current charging pile received by the vehicle is greater than 550 V, a direct-current charging process is performed: If the vehicle is in an OFF gear when a gun is inserted, pre-charging is first performed, the switch K3 is broken, and then the switch K2 is broken. When the control module determines that a pre-charging voltage meets a pre-charging completion condition, the switch K1 is broken, and the switch K2 is broken. The control module detects that the vehicle meets the charging conditions and breaks the switch K4 and the switch K5, and sends the charging permission and the constant current charging manner to the direct-current charging pile. When the direct-current charging pile meets a charging requirement according to an own status, the direct-current charging pile closes an own charging contactor and starts charging. When the vehicle is in the OK gear when the gun is inserted into the vehicle, and the control module directly sends a target charging voltage and a constant current charging command to the direct-current charging pile to start the charging process. As shown in FIG. 9, the voltage transformation module works in a direct-current charging mode: The external power supply module 107, the capacitor C1, the switch K1, and the power battery 101 form a direct-current charging circuit to directly charge the power battery 101.

It is to be noted that, for direct-current charging piles on an actual market, in order to meet charging requirements of electric vehicles as much as possible, many direct-current charging piles mounted early use low-voltage platform power modules (with a maximum voltage of 500 V). Operators change a control board program of the direct-current charging pile, and when the direct-current charging pile interacts with the control module, the direct-current charging pile sends a false maximum voltage to the vehicle as a high-voltage platform (with a voltage up to 750 v to 1000 V). In order to be compatible with this situation, the pile may also be charged, logic that the vehicle recognizes a direct-current charging pile voltage platform during charging is optimized. When the vehicle to which the gun is inserted performs a direct-current charging process, before the direct-current charging pile closes the charging contactor, the direct-current charging pile and the voltage transformation module outputs a target voltage according to the target required voltage sent by the control module: The direct-current charging pile outputs the target voltage and the voltage transformation module perform voltage stabilization output when a voltage measurement voltage is within an error range. After the direct-current charging pile closes the charging contactor, the control module sends a command to the direct-current charging pile to start small-current boosting charging at a constant current, and performs real voltage identification on the direct-current charging pile during small-current boosting charging at the constant current, that is, the output voltage of the direct-current charging pile is received in real time. When the voltage cannot be increased as required, it is determined that the output voltage of the direct-current charging pile is not greater than 550 V, charging is performed according to a boosting process, and the charging current is switched to the maximum target charging current of the control module to start charging; and When the output voltage of the direct-current charging pile can be increased to greater than 550 V based on the required voltage, and direct-current charging is started according to the maximum target charging current of the control module. After charging, when it is detected that a current of a charging loop is not greater than 5 A, the vehicle side breaks the switch K4/K5 and performs switch adhesion detection, to complete the entire execution process.

Another embodiment of the present disclosure provides a vehicle 200. As shown in FIG. 10, the vehicle 200 further includes an energy conversion apparatus 100 provided in the foregoing embodiments.

The foregoing embodiments are merely used for describing the technical solutions of the present disclosure, but are not intended to limit the present disclosure. Although the present disclosure is described in detail with reference to the foregoing embodiments, a person of ordinary skill in the art is to understand that, modifications may still be made to the technical solutions in the foregoing embodiments, or equivalent replacements may be made to some of the technical features; as long as such modifications or replacements do not cause the essence of corresponding technical solutions to depart from the spirit and scope of the technical solutions of the embodiments of the present disclosure.

## Claims

1. An energy conversion apparatus, comprising an energy storage module, a voltage transformation module, a first switch module, a second switch module, and a control module, the energy storage module being connected to the voltage transformation module, the voltage transformation module being connected to a power battery and the first switch module through the second switch module, the first switch module being further connected to the energy storage module and the voltage transformation module, and the control module being respectively connected to the first switch module and the second switch module.

2. The energy conversion apparatus according to claim 1, wherein the voltage transformation module is further connected to a motor controller, a positive electrode of the power battery is connected to a first end of the first switch module and a first end of the second switch module, a second end of the first switch module is connected to a first end of the energy storage module and a low-voltage end of the voltage transformation module, a second end of the second switch module is connected to a high-voltage end of the voltage transformation module and a first bus terminal of the motor controller, a second end of the energy storage module is connected to a negative electrode of the power battery, a common terminal of the voltage transformation module, and a second bus terminal of the motor controller, and the first end and the second end of the energy storage module are charging ports of the energy conversion apparatus.

3. The energy conversion apparatus according to claim 2, wherein the motor controller is connected to a motor, and when the energy conversion apparatus is in a driving mode, the power battery supplies power to the motor through the first switch module, the voltage transformation module, the energy storage module, and the motor controller; and
the energy storage module is connected to an external power supply module, and when the energy conversion apparatus is in a boost charging mode, the external power supply module charges the power battery through the energy storage module, the voltage transformation module, and the second switch module.

4. The energy conversion apparatus according to claim 2 or 3, wherein the first switch module comprises a switch K1, a switch K2, and a resistor R2; and a first end of the resistor R2 is connected to a first end of the switch K1 to form the first end of the first switch module, a second end of the resistor R2 is connected to a first end of the switch K2, and a second end of the switch K2 is connected to a second end of the switch K1 to form the second end of the first switch module.

5. The energy conversion apparatus according to any one of claims 2 to 4, wherein the voltage transformation module comprises a first inductor, a second inductor, a first power switch unit, a second power switch unit, a third power switch unit, and a fourth power switch unit, a first end of the first inductor and a first end of the second inductor are jointly connected to form the low-voltage end of the voltage transformation module, a second end of the first inductor is connected to a second end of the first power switch unit and a first end of the second power switch unit, a second end of the second inductor is connected to a second end of the third power switch unit and a first end of the fourth power switch unit, a first end of the first power switch unit and a first end of the third power switch unit are jointly connected to form the high-voltage end of the voltage transformation module, and a second end of the second power switch unit and a second end of the fourth power switch unit are jointly connected to form the common terminal of the voltage transformation module.

6. The energy conversion apparatus according to any one of claims 2 to 5, further comprising: a switch K3, a switch K4, a switch K5, and a third inductor L3, a first end of the switch K3 being connected to the negative electrode of the power battery, a second end of the switch K3 being connected to the second end of the energy storage module, a first end of the switch K4 being connected to a first end of the external power supply module, a second end of the switch K4 being connected to a first end of the third inductor L3, a second end of the third inductor L3 being connected to the first end of the energy storage module, a first end of the switch K5 being connected to a second end of the external power supply module, and a second end of the switch K5 being connected to the second end of the energy storage module.

7. A charging method of an energy conversion apparatus, based on the energy conversion apparatus according to any one of claims 1 to 6, the charging method comprising:
obtaining, by the energy conversion apparatus when being connected to an external power supply module and in a charging mode, a maximum output voltage of the external power supply module;
when the maximum output voltage of the external power supply module is not greater than a preset voltage, controlling the first switch module to be broken and the second switch module to be closed, to enable the external power supply module to perform boost charging on the power battery through the energy storage module, the voltage transformation module, and the second switch module; and
when the maximum output voltage of the external power supply module is greater than the preset voltage, controlling the first switch module to be closed and the second switch module to be broken, to enable the external power supply module to perform direct-current charging on the power battery through the energy storage module and the first switch module.

8. The charging method according to claim 7, before the obtaining, by the energy conversion apparatus when being connected to an external power supply module and in a charging mode, a maximum output voltage of the external power supply module, the method further comprising:
sending a target required voltage value to the external power supply module, and controlling the first switch module to be closed, to enable the power battery to pre-charge the energy storage module through the first switch module, and enable a voltage value of the energy storage module to be the preset voltage, and then controlling the voltage transformation module to enable the energy storage module to discharge through the voltage transformation module, and enable the voltage value of the energy storage module to be the target required voltage value.

9. The charging method according to claim 7 or 8, wherein the obtaining a maximum output voltage of the external power supply module further comprises:
obtaining a target maximum output voltage of the external power supply module, continuously sending a constant-current boost charging command to the external power supply module, and when detecting that a current outputted by the external power supply module is not a constant current or an actual maximum output voltage is less than the target maximum output voltage, determining that the target maximum output voltage is a false value, and setting the actual maximum output voltage to the maximum output voltage.

10. The charging method according to claim 9, wherein the continuously sending a constant-current boost charging command to the external power supply module further comprises:
obtaining, by the external power supply module, an actual voltage value of the energy storage module, and outputting a current to the energy conversion apparatus when determining that the target required voltage value and the actual voltage value of the energy storage module meet a preset standard.

11. The charging method according to any one of claims 7 to 10, wherein the enabling the external power supply module to perform boost charging on the power battery through the voltage transformation module comprises:
obtaining an actual current value outputted by the voltage transformation module and a target current value, comparing the actual current value with the target current value, and outputting a PWM control signal to the voltage transformation module to enable the voltage transformation module to output the target current value to the power battery to charge the power battery.

12. The charging method according to any one of claims 7 to 11, further comprising:
when the energy conversion apparatus is in a driving mode, controlling the first switch module to be closed, and controlling the voltage transformation module to enable the power battery to boost and supply power to the motor controller through the first switch module, the voltage transformation module, and the energy storage module.

13. A vehicle, further comprising the energy conversion apparatus according to any one of claims 1 to 6.
